# EUROPÄISCHE PATENTANMELDUNG

(11) **EP 2 327 534 A1**
(43) Veröffentlichungstag der Anmeldung: **01.06.2011**
(21) Anmeldenummer: 10186658.0
(22) Anmeldetag: 06.10.2010
(51) Int. Cl.: B29C 65/72, B29C 65/08, B29C 65/18, B29C 65/38, B65B 51/14, B65B 51/22

(54) **Vorrichtung und Verfahren zum Verschweißen von Werkstücken**

(30) Priorität: 25.11.2009 DE 102009047138
(71) Anmelder: Telsonic Holding AG, 9552 Bronschhofen (CH)
(72) Erfinder: Möglich, Hartmut, 76275 Ettlingen (DE)
(74) Vertreter: Dreiss

(57) **Zusammenfassung**

Die Erfindung betrifft eine Vorrichtung zum Verschweißen von Werkstücken, insbesondere von Kunststofffolien, wobei die Vorrichtung eine Ultraschallschweißvorrichtung (10) und eine thermische Schweißvorrichtung (14) aufweist. Die Erfindung betrifft auch ein Verfahren zum Verschweißen von Werkstücken, wobei eine Ultraschallschweißvorrichtung (10) und eine thermische Schweißvorrichtung (14) verwendet werden.

## Beschreibung

Die Erfindung betrifft eine Vorrichtung zum Verschweißen von Werkstücken, insbesondere von dünnen Kunststofffolien oder mehrlagigen Kunststofffolien, wie Seitenfaltbeuteln. Die Erfindung betrifft auch ein Verfahren zum Verschweißen von Werkstücken.

Unter dem thermischen Verschweißen von Folien ist nachfolgend das Warmpressen von Folien, insbesondere von Kunststofffolien zu verstehen. Bearbeitungsvorgänge, bei denen das Warmpressen als ein Verfahrensschritt vorgesehen ist, sind insbesondere das Fügen/Verbinden (z.B. Schweißen, Laminieren, Siegeln), das Trennen (z.B. Schneiden, Trennschweißen, Schmelzen) und das Umformen (z.B. Prägen, Ziehen, Kerben).

Das Wärmeimpulsschweißen ist aus der Folienschweißtechnik bekannt (DE 198 15 763 A1). Dazu wird ein Werkzeug mit einer Heizeinrichtung verwendet, die im wesentlichen einen Schienenkörper mit einem darauf befestigten Heizband aufweist. Zwischen dem Schienenkörper und dem Heizband ist eine thermische Isolierung vorgesehen. Die Heizeinrichtung wird fest auf die zu verschweißenden Folien gedrückt, worauf das Heizband über einen Impulsgeber mit einem Stromimpuls beaufschlagt und aufgeheizt wird. Dadurch werden die Folien erwärmt und miteinander verschweißt.

Werden mit diesem Verfahren z.B. einseitig offene aber bereits befüllte Kunststoffbeutel (pouch) verschweißt, dann besteht die Gefahr, dass aufgrund von Verunreinigungen an den miteinander zu verschweißenden Flächen die Verschweißung nicht oder nur mangelhaft erfolgt.

Der Erfindung liegt die Aufgabe zugrunde eine Vorrichtung und/oder ein Verfahren bereit zu stellen, mit der und/oder mit dem eine höhere Sicherheit für eine gute Verscheißung von Kunststofffolien erzielt werden kann.

Diese Aufgabe wird mit einer Vorrichtung gelöst, die eine Ultraschallschweißvorrichtung und eine thermische Schweißvorrichtung aufweist. Diese Aufgabe wird zudem mit einem Verfahren gelöst, bei dem eine Ultraschallschweißvorrichtung und eine thermische Schweißvorrichtung verwendet werden.

Dadurch , dass bei der Verschweißung der Folien zusätzlich eine Ultraschallschweißvorrichtung verwendet wird, kann ein Reinigungseffekt erzielt werden, so dass eine optimale Verschweißung der miteinander zu verschweißenden Flächen, z.B. der Beutelränder gewährleistet ist. Ein weiterer Effekt ist die bessere Verschweißung von dünnen Folien. Dünne Folien haben üblicherweise eine geringere Dämpfung, so dass sie nur unzureichend mit Ultraschall verschweißt werden können. Werden die dünnen Folien aber zuvor oder gleichzeitig mit der thermischen Schweißvorrichtung erwärmt, besitzen sie eine höhere Absorptionsrate für Ultraschall, wodurch die Qualität der Verscheißung wesentlich gesteigert wird. Zudem werden dünne und harte Folien durch das Erwärmen mit der thermischen Schweißvorrichtung weicher, wodurch die Gefahr einer Beschädigung während der Ultraschallverschweißung vermindert wird.

Bevorzugt ist die thermische Schweißvorrichtung eine Impulsschweißvorrichtung. An sich ist das Impulsschweißen bekannt. Das Impulsschweißen besitzt den Vorteil, dass die in das Werkstück einzubringende Energie sehr genau gesteuert werden kann.

Bevorzugt besitzt die thermische Schweißvorrichtung einen Sensor, der die Temperatur überwacht und die Energieversorgung der thermischen Schweißvorrichtung ansteuert.

Bei bevorzugten Ausführungsbeispielen weist die Ultraschallschweißvorrichtung eine Sonotrode und ein Gegenwerkzeug auf und ist die thermische Schweißvorrichtung in die Sonotrode und/oder in das Gegenwerkzeug integriert.

Dabei kann die thermische Schweißvorrichtung als Backen oder als Beschichtung ausgebildet sein.

Um nach dem Schweißvorgang möglichst rasch eine ausreichend hohe Festigkeit des Schweißbereichs zu erhalten, ist die thermische Schweißvorrichtung mit einer Kühlvorrichtung ausgestattet. Das Schweißwerkzeug kann früher geöffnet und der Werkstück früher entnommen werden. Der Arbeitszyklus wird durch die Kühlvorrichtung verkürzt, so dass in der gleichen Zeiteinheit mehr Werkstücke bearbeitet werden können als ohne Kühlvorrichtung.

Bei einem bevorzugten Ausführungsbeispiel weist die Kühlvorrichtung einen Kühlkanal auf und WIRD der Kühlkanal von einem Kühlmedium durchströmt. Ein Anblasen mit Drucklust ist ebenfalls denkbar.

Beim erfindungsgemäßen Verfahren können die Ultraschallschweißvorrichtung und die thermische Schweißvorrichtung gleichzeitig und/oder abwechselnd betrieben werden. Z.B. kann die thermische Schweißvorrichtung nach dem Anwärmen der Folien noch weiter betrieben werden. Zudem kann mit der Kühlvorrichtung z.B. einseitig gekühlt und auf der anderen Seite mittels Ultraschall geschweißt werden, falls dies in einem Anwendungsfall erforderlich sein sollte.

Es besteht auch die Möglichkeit, dass die thermische Schweißvorrichtung abwechselnd beheizt und gekühlt wird.

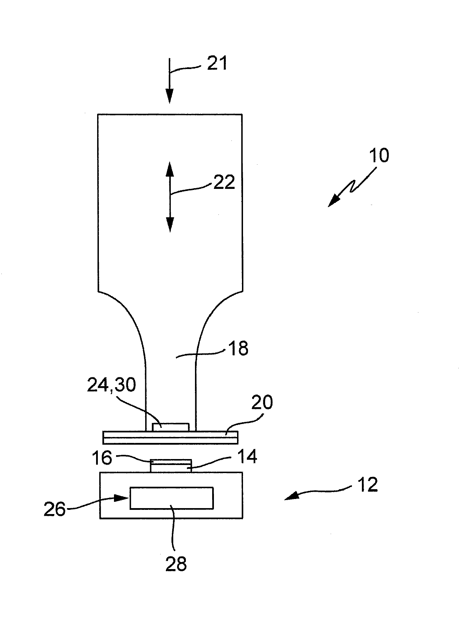

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in der Beschreibung und in den Ansprüchen erwähnten Merkmale jeweils einzeln für sich oder in beliebiger Kombination erfindungswesentlich sein.

Die Zeichnung zeigt eine Seitenansicht der erfindungsgemäßen Vorrichtung. Unterhalb einer Ultraschallschweißvorrichtung 10 mit einer Sonotrode 18 befindet sich ein Gegenwerkzeug 12, und zwischen der Sonotrode 18 und dem Gegenwerkzeug wird ein mit 20 bezeichnetes Werkstück bearbeitet. Insbesondere werden zwei dünne Kunststofffolien miteinander verschweißt. Im Gegenwerkzeug 12 ist eine thermische Schweißvorrichtung 14 integriert. Diese weist eine Beschichtung 16 auf, die elektrisch beheizbar ist. Somit wirken auf das Werkstück 20 nach dem Zusammenfahren von Ultraschallschweißvorrichtung 10 und thermischer Schweißvorrichtung 14 die Anpresskraft 21 der Sonotrode 18, die in Richtung des Doppelpfeils 22 ausgerichtete Ultraschallschweißenergie auf der Oberseite und die Heizenergie der thermischen Schweißvorrichtung 14 auf der Unterseite. Das Werkstück 20 wird also zuerst thermisch erwärmt und anschließend ultraschallverschweißt. Die thermische Erwärmung und die Verschweißung mittels Ultraschall kann aber auch gleichzeitig erfolgen, d.h. dass während der Zufuhr von Ultraschallenergie auch thermische Energie zugeführt wird. Dabei kann die thermische Energiemenge zeitlich variiert werden.

Es besteht auch die Möglichkeit, dass in der Schweißfläche der Sonotrode 18 eine thermische Schweißvorrichtung 24 vorgesehen ist. Diese kann in Form eines beheizbaren Backens (30) ausgebildet sein, so dass das Werkstück 20 auf beiden Seiten thermisch beheizbar ist.

Schließlich ist aus der Zeichnung noch erkennbar, dass sich unterhalb der thermischen Schweißvorrichtung 14 eine Kühlvorrichtung 26 befindet, die einen Kühlkanal 28 aufweist, in welchem ein Kühlmedium, z.B. ein Kühlgas oder eine Flüssigkeit, z.B. Wasser, strömt. Mit dieser Kühlvorrichtung kann das Werkstück 20 unmittelbar nach dem Schweißvorgang gekühlt werden, wodurch die Bearbeitungszyklen verkürzt werden. Ein derartiger Kühlkanal (nicht dargestellt) kann auch in der Sonotrode 18 vorgesehen sein. In diesem Kühlkanal wird dann bevorzugt ein Kühlgas geführt.

## Patentansprüche

1. Vorrichtung zum Verschweißen von Werkstücken (20), insbesondere von Kunststofffolien, wobei die Vorrichtung eine Ultraschallschweißvorrichtung (10) und eine thermische Schweißvorrichtung (14) aufweist.

2. Vorrichtung nach Anspruch 1, **dadurch gekennzeichnet, dass** die thermische Schweißvorrichtung (14) eine Impulsschweißvorrichtung ist.

3. Vorrichtung nach einem der vorhergehenden Ansprüche,
**dadurch gekennzeichnet, dass** die Ultraschallschweißvorrichtung (10) eine Sonotrode (18) und ein Gegenwerkzeug (12) aufweist und die thermische Schweißvorrichtung (14) in die Sonotrode (18) und/oder in das Gegenwerkzeug (12) integriert ist.

4. Vorrichtung nach einem der vorhergehenden Ansprüche,
**dadurch gekennzeichnet, dass** die thermische Schweißvorrichtung (14) als Backen (30) oder als Beschichtung (16) ausgebildet ist.

5. Vorrichtung nach einem der vorhergehenden Ansprüche,
**dadurch gekennzeichnet, dass** die thermische Schweißvorrichtung (14) mit einer Kühlvorrichtung (26) ausgestattet ist.

6. Vorrichtung nach Anspruch 5, **dadurch gekennzeichnet, dass** die Kühlvorrichtung (26) einen Kühlkanal (28) aufweist und der Kühlkanal (28) von einem Kühlmedium durchströmt wird.

7. Verfahren zum Verschweißen von Werkstücken(20), insbesondere mit einer Vorrichtung nach einem der vorhergehenden Ansprüche, **dadurch gekennzeichnet, dass** eine Ultraschallschweißvorrichtung (10) und eine thermische Schweißvorrichtung (14) verwendet werden.

8. Verfahren nach Anspruch 7, **dadurch gekennzeichnet, dass** die Ultraschallschweißvorrichtung (10) und die thermische Schweißvorrichtung (14) gleichzeitig und/oder abwechselnd betrieben werden.

9. Verfahren nach Anspruch 7 oder 8, **dadurch gekennzeichnet, dass** die thermische Schweißvorrichtung (14) abwechselnd beheizt und gekühlt wird.
